# EUROPÄISCHE PATENTSCHRIFT

(11) **EP 2 446 399 B1**
(45) Veröffentlichungstag und Bekanntmachung des Hinweises auf die Patenterteilung: **10.08.2016**
(21) Anmeldenummer: 10726502.7
(22) Anmeldetag: 24.06.2010
(51) Int. Cl.: G06K 19/073, G06K 19/07

(54) **VERFAHREN, TRAGBARER DATENTRÄGER, FREIGABEVORRICHTUNG UND SYSTEM ZUM FREIGEBEN EINER TRANSAKTION**
METHOD, PORTABLE DATA STORAGE MEDIUM, APPROVAL APPARATUS AND SYSTEM FOR APPROVING A TRANSACTION
PROCÉDÉ, SUPPORT DE DONNÉES PORTABLE, DISPOSITIF D'AUTORISATION ET SYSTÈME D'AUTORISATION D'UNE TRANSACTION

(30) Priorität: 25.06.2009 DE 102009030456
(43) Veröffentlichungstag der Anmeldung: 02.05.2012
(73) Patentinhaber: Giesecke & Devrient GmbH, 81677 München (DE)
(72) Erfinder: FINKENZELLER, Klaus, 85774 Unterföhring (DE); RANKL, Wolfgang, 81825 München (DE)
(86) Internationale Anmeldenummer: PCT/EP2010/058965
(87) Internationale Veröffentlichungsnummer: WO 2010/149730

(56) Entgegenhaltungen:
- EP-A1- 2 031 548
- WO-A1-2008/092527
- US-A1- 2009 065 575
- CZESKIS ALEXEI ET AL: "RFIDs and secret handshakes: defending against ghost-and-leech attacks and unauthorized reads with context-aware communications" PROCEEDINGS OF THE 15TH ACM CONFERENCE ON COMPUTER AND COMMUNICATIONS SECURITY : ALEXANDRIA, VIRGINIA, USA, OCTOBER 27 - 31, 2008, ACM, NEW YORK, NY, 27. Oktober 2008 (2008-10-27), Seiten 479-490, XP002597239 ISBN: 978-1-59593-810-7 [gefunden am 2008-10-01]

## Beschreibung

Die Erfindung betrifft ein Verfahren, einen tragbaren Datenträger, eine Freigabevorrichtung sowie ein System zum Freigeben einer Transaktion mit Hilfe von Beschleunigungssensoren.

Im Sinne der Anmeldung wird ein Beschleunigungssensor als ein Sensor verstanden, der die Beschleunigung eines Körpers ermittelt, beispielsweise indem die auf eine Testmasse wirkende Trägheitskraft bestimmt wird. Bekannt nach dem Stand der Technik sind Beschleunigungssensoren und Rotationssensoren auf Halbleiterbasis. Ein derartiger Beschleunigungssensor misst lineare Eigenbewegungen und Beschleunigungen und löst anschließend anhand des Messergebnisses Schaltvorgänge abhängig von der Eigenbewegung im Raum aus. Ein Rotationssensor ermittelt die eigene Drehbewegung um eine Achse. Lediglich beispielhaft seien hier der Ein-Achsen-Rotationssensor LY530AL und der 3-Achsen-Rotationssensor LIS344ALH der Firma ST Microelectronics als elektronische Bauteile genannt.

Die Möglichkeit einen Bewegungssensor in einen tragbaren Datenträger, insbesondere in Form einer Chipkarte, zu integrieren ist aus der Offenlegungsschrift DE 102 48 389 bekannt. Der Bewegungssensor wird hier ausschließlich zum Erfassen eines Schriftzuges eingesetzt.

Ein Problem tragbarer Datenträger besteht darin, dass diese aus der Entfernung vom Besitzer unbemerkt, zum Beispiel durch eine Tasche hindurch, über eine kontaktlose Schnittstelle ausgelesen werden können. Besonders kritisch ist hierbei die Möglichkeit einer Relay-Attacke, da hier über eine Funkstrecke eine Verbindung zu einem "echten" Lesegerät aufgebaut wird. Ein solcher Angriff ist zum Beispiel im Kapitel 8 des Buchs "Handbuch für Chipkarten" von Rankl, Effing beziehungsweise im Kapitel 8 des Buchs "RFID-Handbuch" von Finkenzeller beschrieben. Die Relay-Attacke wird in der Literatur auch als Relais-Angriff, oder Ghost-and-Leech-Angriff bezeichnet.

Gemäß Stand der Technik wird zur Umgehung dieses Problems beispielsweise vorgeschlagen, tragbare Datenträger mit einem Taster auszustatten. Der Einbau eines Tasters in eine Chipkarte oder einen Sicherheitstoken ist jedoch sehr aufwändig und verursacht hohe Produktionskosten. Als mechanisches Bauteil ist ein Taster darüber hinaus immer einem Verschleiß unterworfen und kann auch durch Kontaktprobleme Schwierigkeiten bereiten.

Aus der Veröffentlichung *"*RFIDs and Secret Handshakes: Defending Against Ghost-and-Leech Attacks and Unauthorized Reads with Context-Aware Communications", erschienen bei der 15. ACM Conference of Computer and Communications Security 2008, Seite 479 bis 490, ist die Möglichkeit bekannt, mit Hilfe eines Beschleunigungssensors charakterisierende Gesten zu erfassen, um den Zugriff auf einen Datenträger freizugeben.

Dieses Verwenden von Gesten scheint aus heutiger Sicht nicht praktikabel zu sein. Bei passiven tragbaren Datenträgern, die ohne Batterie ausgestattet sind, ist der Bereich zum Ausführen von Gesten ähnlich groß, wie der Bereich in dem überhaupt zwischen dem tragbaren Datenträger und einem Endgerät, insbesondere einem Lesegerät, kommuniziert werden kann, da dem Datenträger nur in diesem Bereich Energie zur Ausführung seiner Messungen und Berechnungen zur Verfügung steht. Bei der Verwendung von Lesegeräten nach ISO/IEC 14443 mit einer typischen Reichweite von beispielsweise 10 cm ist der Bewegungsspielraum zum Ausführen einer Geste im Lesebereich einer Karte somit stark eingeschränkt. Hinzu kommt eine mögliche Hemmschwelle, an einem Endgerät, beispielsweise einem POS-Terminal oder einem Fahrkartenautomaten in der Öffentlichkeit, mit dem tragbaren Datenträger komplexe Gesten auszuführen.

Aus der Patentschrift EP 1 745 420 B1 ist wiederum bekannt, den Kartenkörper einer Chipkarte mit einem inhomogenen Material zu gestalten. Die durch das Material der Karte entstehenden charakteristischen Eigenschwingungen bei Anregung der Chipkarte werden ausgewertet und dadurch die Chipkarte identifiziert. Dieses Verfahren erscheint sehr kostenintensiv, da jeder Kartenkörper individuell sein muss.

WO 2008/092527 A1 betrifft ein Verfahren zum Ermöglichen eines Zuganges zu Daten, die auf einem mobilen Datenträger, wie beispielsweise einer Smartcard gespeichert sind. Dazu überprüft die mobile Einrichtung, ob ein Signalmuster, das von einem Beschleunigungssensor erzeugt wird, mit einem vorgegebenen Bezugsmuster, das in dem mobilen Datenträger gespeichert ist, übereinstimmt.

Aus US 2009/ 065575 A1 geht eine Einrichtung hervor, mit der es möglich ist, kontaktlose Bezahlungen über kurze Distanzen zu autorisieren. Dazu wird eine Bewegung und Position ausgewertet und in Abhängigkeit von dem Ergebnis der Auswertung eine Transaktion freigegeben oder nicht.

Aufgabe der hier vorliegenden Erfindung ist es demnach, ein Verfahren, ein System, einen tragbaren Datenträger und eine Freigabevorrichtung zu zeigen, mit welchem die Freigabe einer Transaktion zwischen einem tragbaren Datenträger und einem Endgerät kostengünstiger, sicherer und einfacher erfolgt.

Als eine Transaktion wird im Sinn der Anmeldung eine logische Folge von Operationen verstanden. Eine Transaktion ist beispielsweise ein Bezahlvorgang zwischen einem tragbaren Datenträger und einem Endgerät über eine Kontaktlosschnittstelle. Eine Transaktion ist alternativ auch das Auslesen von sicherheitskritischen Informationen, beispielsweise PIN Nummern, persönlichen Daten oder allgemeine Geheimnisse, wie TAN-Nummern, Passwörtern und der gleichen mehr.

Die Aufgabe wird mit allen unabhängig nebengeordneten Patentansprüchen gelöst. Vorteilhafte Ausgestaltungen sind in den jeweilig abhängigen Ansprüchen beschrieben.

Erfindungsgemäß wird die Aufgabe durch ein Verfahren zum Freigeben einer Transaktion zwischen einem tragbaren Datenträger und einem Endgerät gelöst, dass zunächst der tragbare Datenträgers in ein elektromagnetisches Feld eingebracht wird. Das EM-Feld ist dabei vom Endgerät erzeugt. Das EM-Feld dient als Energieversorgung und zur Aktivierung des tragbaren Datenträgers. Zunächst werden keine Transaktionen zwischen dem tragbaren Datenträger und dem Endgerät freigegeben, die sicherheitsrelevante Informationen oder Daten beinhalten. Anschließend wird der tragbare Datenträger durch mechanische Schwingung angeregt. Diese mechanischen Schwingungen werden in der Folge im tragbaren Datenträger mittels Beschleunigungssensor erfasst. Anschließend wird das Ausgangssignal des Beschleunigungssensors hinsichtlich charakteristischer Eigenschaften der mechanischen Schwingung ausgewertet bzw. analysiert. Sobald durch das Auswerten des Ausgangssignals eine charakteristische Eigenschaft der Schwingung erkannt wurde, erfolgt das Freigeben der Transaktion durch den tragbaren Datenträger.

Ein tragbarer Datenträger im Sinn der Anmeldung ist prinzipiell nicht in seiner Form und Ausgestaltung vorgegeben. Insbesondere ist als ein tragbarer Datenträger eine Chipkarte, Smart Card, oder allgemein ein Sicherheitstoken beispielsweise mit Identifikationsfunktion, zu verstehen. Alternative Ausgestaltungen, beispielsweise als Massenspeicherkarte, zum Beispiel µSD-Karte sind ebenfalls denkbar. Weiterhin ist im Sinne der Anmeldung ein elektronischer Pass oder andersartiges Identifikationsmedium verstanden, welches sicherheitskritische Informationen enthält, die nicht allgemein aus dem Datenträger ausgelesen werden sollen. Im weiteren Sinn ist der tragbare Datenträger ein Mobiltelefon, mit dem Transaktionen, beispielsweise über eine Nahfeldkommunikation mit einem Endgerät durchgeführt werden können. Das Mobiltelefon als tragbarer Datenträger weist dabei eine Nahfeldkommunikationsschnittstelle auf..

Als Endgerät ist jede Art von Kommunikationsgerät zu verstehen, mit der der tragbare Datenträger insbesondere kontaktlos kommunizieren kann. Eine Kommunikation erfolgt beispielhaft mit einem Lesegerät, auch als Terminal bezeichnet, nach ISO/IEC 14443 standardisiert. Das Endgerät ist zum Beispiel ein POS-Terminal oder ein Fahrkartenautomat mit Nahbereichskommunikationsschnittstelle.

Eine Schwingung beschreibt grundsätzlich den periodischen Verlauf einer Zustandsänderung einer physikalischen Größe. Als eine Art mechanischer Schwingung wird beispielsweise eine Vibration, ein abruptes Auflegen oder das Reiben/Verbiegen des Datenträgers verstanden.

Durch das erfindungsgemäße Verfahren wird auf einfache Art und Weise unterbunden, dass ein tragbarer Datenträger eine Transaktion mit einem Endgerät durchführt, ohne dass die Transaktion vorher freigegeben worden ist. Auf diese Weise sind beispielsweise Relay-Attacken oder nicht vom Benutzer des tragbaren Datenträgers gewünschte Transaktionen unterbunden.

In einer vorteilhaften Ausgestaltung wird der tragbare Datenträger durch das mechanische Anregen in Eigenschwingung gebracht. Anschließend wird diese Eigenschwingung des Datenträgers in Form von Beschleunigung mittels des Beschleunigungssensors erfasst und ausgewertet. Der Vorteil in dietels des Beschleunigungssensors erfasst und ausgewertet. Der Vorteil in dieser Ausgestaltung ist darin zu sehen, dass mit minimaler Anregung eine Beschleunigung des Datenträgers gut auswertbar ist.

In vorteilhafter Weise ist die charakteristische Eigenschaft die Zeitdauer, die Frequenz und/ oder die Amplitude der mechanischen Schwingung. Demzufolge wird eine Transaktion nur freigegeben wenn ein Sollwert der charakteristischen Eigenschaft der Schwingung überschritten ist, andernfalls wird die Transaktion nicht freigegeben.

Gemäß der Erfindung erfolgt die Anregung des Datenträgers mit mechanischer Schwingung durch das Endgerät. Dazu wird der Datenträger auf das Endgerät platziert. Insbesondere durch eine Mechanik werden Teile der Oberfläche des Endgeräts in Schwingung gesetzt. Alternative Verfahren, um die Oberfläche zum Schwingen anzuregen sind ebenfalls denkbar. Der tragbare Datenträger wird durch diese mechanische Schwingung angeregt. Der Beschleunigungsmesser im Datenträger erfasst diese mechanischen Schwingungen dadurch, dass der Datenträger selbst in mindestens eine Richtung beschleunigt wird. Als mechanische Schwingungen sind in vorteilhafter Weise Vibrationen mit Auslenkungen im Millimeter oder Submillimeterbereich vorgesehen. Der Benutzer des tragbaren Datenträgers ist durch Auflegen auf das Endgerät aktiv am Transaktionsfreigabe-Verfahren beteiligt.

Eine einfache und dadurch vorteilhafte Ausgestaltung ist gegeben, wenn das Endgerät mit einer schwingfähigen Teiloberfläche ausgestattet ist. Diese Teiloberfläche wird mittels linearer oder zirkularer Bewegungen, beispielsweise einer Mechanik im Endgerät, schwingend und regt den aufgelegten tragbaren Datenträger an. Bevorzugt wird die Antenne des Endgeräts, die zum Aussenden des elektromagnetischen Feldes vorgesehen ist, in oder unter der schwingfähigen Teilfläche des Endgeräts eingebracht. Somit ist der ohnehin geringe Bereich zur Kommunikation zwischen Endgerät und Datenträger durch das erfindungsgemäße Verfahren nicht zusätzlich verkleinert.

In einer bevorzugten Ausführung sind die linearen oder zirkularen Schwingungen des Endgeräts in der Frequenz schwankend. Alternativ oder zusätzlich sind mehrere lineare oder zirkulare mechanischen Schwingungen überlagert. Das Schwanken der Frequenzen und/ oder die Schwingungsüberlagerung werden als charakteristische Eigenschaft im tragbaren Datenträger ausgewertet. Somit sind verschiedene Freigabearten für die Kommunikation zwischen Datenträger und Endgerät realisierbar. Eine entsprechende Codierung ist dabei ebenfalls möglich.

Durch das Aussenden von weiteren linearen oder zirkularen Schwingungen vom Endgerät während der Transaktion können verschiedene Statusmeldungen bzw. Statusinformationen der Transaktion, beispielsweise das Ende oder das Fehlschlagen einer Transaktion mitgeteilt werden.

In einer alternativen Ausgestaltung der Erfindung erfolgt das Anregen des Datenträgers mit mechanischer Schwingung derart, dass der Datenträger abrupt auf das Endgerät abgelegt wird. Das abrupte Auflegen wird als charakteristische Eigenschaft der mechanischen Schwingungen ausgewertet. Insbesondere werden hierbei die Eigenbeschleunigung des tragbaren Datenträgers vor dem abrupten Auflegen und/ oder eine Winkelerfassung nach dem abrupten Auflegen als charakteristische Eigenschaft der mechanischen Schwingungen ausgewertet.

In einer weiteren alternativen Ausgestaltung wird der tragbare Datenträger mechanisch angeregt, indem er an einer Außenfläche des Endgeräts bewegt bzw. gerieben wird. Die durch die Reibung entstehenden Schwingungen werden als Beschleunigungen im tragbaren Datenträger erfasst und ausgewertet.

Das Einbringen des tragbaren Datenträgers in ein EM-Feld zur Energieversorgung kann insofern entfallen, als das der Datenträger über eine eigene Energieversorgung verfügt, beispielsweise in Form eines Akkumulators, einer Batterie und/ oder einer photovoltaischen Zelle. In dieser Ausgestaltung ist das EM-Feld zur Energieversorgung unnötig, die Freigabe einer Transaktion wird trotzdem über das erfindungsgemäße Verfahren ablaufen, um beispielsweise das Auslesen von sicherheitsrelevanten oder sicherheitskritischen Informationen der eingangs beschriebenen Art zu verhindern.

Ebenfalls erfindungsgemäß vorgesehen ist ein tragbarer Datenträger zur Datenübertragung mit einem Endgerät, wobei der Datenträger eine Freigabevorrichtung aufweist und die Freigabevorrichtung einen Beschleunigungssensor, wobei mechanische Schwingungen des Datenträgers durch den Beschleunigungssensor feststellbar sind und eine Auswerteinheit, wobei die Auswerteinheit zum Auswerten der Beschleunigungssensorausgangssignale vorgesehen ist, die mechanischen Schwingungen feststellen kann, umfasst. Eine Datenübertragung zwischen tragbarem Datenträger und dem Endgerät ist freigebbar, sobald die Auswerteeinheit aufgrund einer, für die Freigabe erforderliche Charakteristik der mechanischen Schwingung, ein Freigabesignal erzeugt.

Weiterhin ist im Erfindungsumfang ein Modul zum Freigeben einer Transaktion mit einem Endgerät enthalten. Das Modul umfasst einen Beschleunigungssensor zum Erfassen einer mechanischen Schwingung, eine Auswerteinheit zum Auswerten der erfassten mechanischen Schwingung, wobei die mechanische Schwingung hinsichtlich charakteristischer Eigenschaften ausgewertet wird, eine Vergleichseinheit zum Vergleich des charakteristischen Eigenschaften der mechanischen Schwingung der Auswerteeinheit mit einem Sollwert der charakteristischen Eigenschaften, wobei die Vergleichseinheit die Transaktion freigibt, wenn der Sollwert der charakteristischen Eigenschaft überschritten ist und die Vergleichseinheit die Transaktion nicht freigibt, wenn der Sollwert der charakteristischen Eigenschaft unterschritten ist.

Der Sollwert könnte in einem Datenspeicher im Datenträger abgelegt sein und während der Auswertung der charakteristischen Eigenschaft der Schwingung abgerufen werden.

Schließlich ist erfindungsgemäß ein System zum Freigeben einer Transaktion vorgesehen. Das System umfasst einen tragbaren Datenträger, beinhaltend ein zuvor beschriebenes Modul zum Freigeben einer Transaktion mit einem Endgerät und das Endgerät selbst, wobei der tragbare Datenträger mit einer mechanischen Schwingung anregbar ist und die Vergleichseinheit des Moduls bei Überschreitung eines Sollwerts einer charakteristischen Eigenschaft der mechanischen Schwingung die Transaktion freigibt.

Vorteilhaft an dem erfindungsgemäßen Verfahren ist die Verwendung der Karte in der vom Nutzer gewohnten Art und Weise. Dazu werden Halbleiterbauteile verwendet, die einfach in ein Hardwaremodul, beispielsweise in ein Chipmodul einer Chipkarte als tragbarer Datenträger integriert werden kann.

Es zeigen:
- Fig.1: Blockschaltbild eines erfindungsgemäßen tragbaren Datenträgers mit Freigabevorrichtung zum Freigeben einer Transaktion in Draufsicht
- Fig.2: Blockschaltbild eines erfindungsgemäßen tragbaren Datenträgers gemäß Figur 1 als Querschnittszeichnung
- Fig. 3: Blockschaltbild eines erfindungsgemäßen Systems zur Freigabe einer Transaktion
- Fig. 4: Skizzenhafte Darstellung einer erfindungsgemäßen schwingfähigen Teiloberfläche eines Endgeräts mit Schwingungserzeugungsvorrichtung
- Fig. 5: Detailliertes Blockschaltbild einer erfindungsgemäßen Freigabevorrichtung zum Einbringen in einen tragbaren Datenträger gemäß Figur 1 oder 2
- Fig. 6: Beispielhaftes Spannungs-Zeit Diagramm der Beschleunigungssensorausgangssignalen in X, Y und Z-Richtung bei Anregen des Datenträgers mittels vom Endgerät erzeugter mechanischer Schwingungen
- Fig. 7: Beispielhaftes Spannungs-Zeit Diagramm der Beschleunigungssensorausgangssignalen in X, Y und Z-Richtung bei Anregen des Datenträgers bei abruptem Auflegen des Datenträgers
- Fig. 8: Beispielhafte Beschleunigungssensorausgangssignale in X, Y und Z-Richtung beim Auflegen des Datenträgers auf eine 30° geneigte Oberfläche
- Fig. 9: Beispielhaftes Amplitude-Frequenz Diagramm der Beschleunigungssensorausgangssignalen in X, Y und Z-Richtung durch FFT-Analyse des in Figur 6 gezeigten Diagramms
- Fig.10: Ablaufdiagramm eines erfindungsgemäßen Verfahrens zur Freigabe einer Transaktion zwischen einem tragbaren Datenträger und einem Endgerät

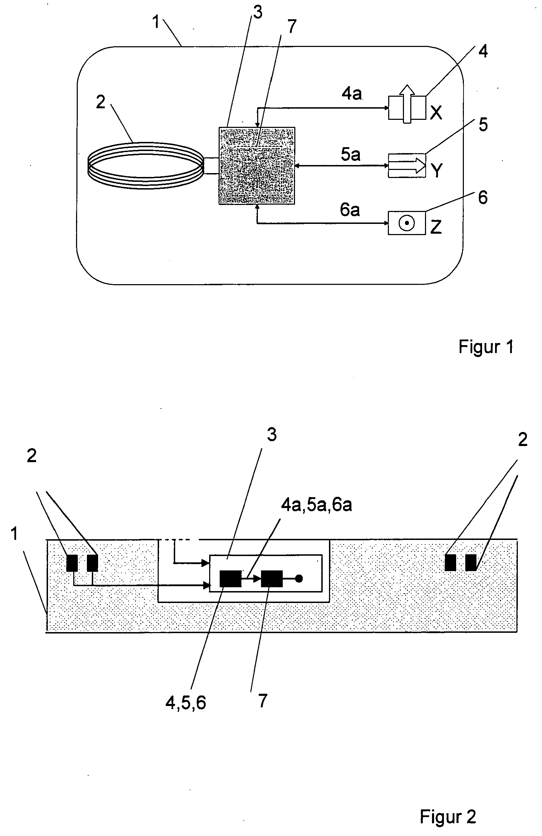

In der Figur 1 ist ein Blockschaltbild eines erfindungsgemäßen tragbaren Datenträgers 1 mit Freigabevorrichtung 7 zum Freigeben einer Transaktion in Draufsicht dargestellt. Der tragbare Datenträger 1 ist hier in Form einer Chipkarte, englisch smart card, dargestellt. Zur Kommunikation mit einem Endgerät (hier nicht dargestellt) ist in den Körper des Datenträgers 1 eine Antenne 2 zur Nahfeldkommunikation, englisch near field communication NFC, eingebracht. Die Antenne 2 ist mit Antennenanschlüssen mit einem integrierten Schaltkreis 3 elektrisch gekoppelt. Durch das EM-Feld und die Antenne 2 wird der integrierte Schaltkreis 3 mit Energie versorgt und aktiviert. Der integrierte Schaltkreis 3 weist die Freigabevorrichtung 7 auf. Weiterhin sind im tragbaren Datenträger 3 Beschleunigungssensoren 4, 5, 6 eingebracht. Der Beschleunigungssensor 4 erfasst dabei Beschleunigungen in X-Richtung, der Sensor 5 Beschleunigungen in Y-Richtung und der Beschleunigungssensor 6 in Z-Richtung. Die Ausgangssignale 4a, 5a und 6a der Beschleunigungssensoren 4, 5, 6 werden dem integrierten Schaltkreis 3 zugeführt.

In Figur 2 ist der tragbare Datenträger 1 aus Figur 2 als Querschnitt in Blockschaltbild dargestellt.

Wird der tragbare Datenträger 1 gemäß Figur 1 oder 2 in ein von einem Endgerät erzeugten elektromagnetischen Feld, kurz EM-Feld, eingebracht, entnimmt die Antenne 2 dem erzeugten EM-Feld Energie und stellt diese Energie dem integrierten Schaltkreis 3 zur Verfügung. Erfindungsgemäß ist vorgesehen, beim Eintritt und Aufenthalt des Datenträgers 1 die Ausgangssignale 4a, 5a, 6a der Beschleunigungssensoren 4,5,6 hinsichtlich einer charakteristischen Eigenschaft auszuwerten und daraus die Entscheidung zur Freigabe oder Nichtfreigabe einer kontaktlosen Transaktion abzuleiten. Der integrierte Schaltkreis 3 gibt also solange keine Freigabe einer Transaktion mit dem Endgerät, bis die Beschleunigungssensoren 4, 5, 6 Beschleunigungen in der Form erfassen und als Ausgangssignale 4a, 5a, 6a dem integrierten Schaltkreis 3 zuführen, sodass eine charakteristische Eigenschaft von mechanischer Schwingung festgestellt worden ist.

Als charakteristische Eigenschaft, die zur Freigabe einer Transaktion zwischen Endgerät und Datenträger 1 kann beispielsweise eine Zeitdauer T, eine Amplitudenhöhe der Ausgangssignale 4a, 5a 6a, eine Abfolge einer Intensitätsschwankung oder eine spezielle Frequenz der erfassten Beschleunigungen angesehen werden. Diese charakteristischen Eigenschaften können für eine erforderliche Freigabe auch beliebig kombiniert werden.

In den Figuren 1 und 2 sind die Beschleunigungssensoren 4, 5, 6 getrennt vom Schaltkreis 3 in den Körper des tragbaren Datenträgers 3 eingebracht. Alternativ und bevorzugt sind die Beschleunigungssensoren 4, 5, 6 im integrierten Schaltreis 3 eingebracht. Alternativ kann nur ein Beschleunigungssensor oder wenigstens ein Rotationssensor (bildlich nicht dargestellt) anstelle der drei Beschleunigungssensoren 4, 5, 6 vorgesehen sein.

Der Datenträger 1 ist derart beschaffen, dass er bei Anregen mittels mechanischer Schwingung eine ausreichend detektierbare Beschleunigung im Inneren des Datenträgerkörpers durchführt.

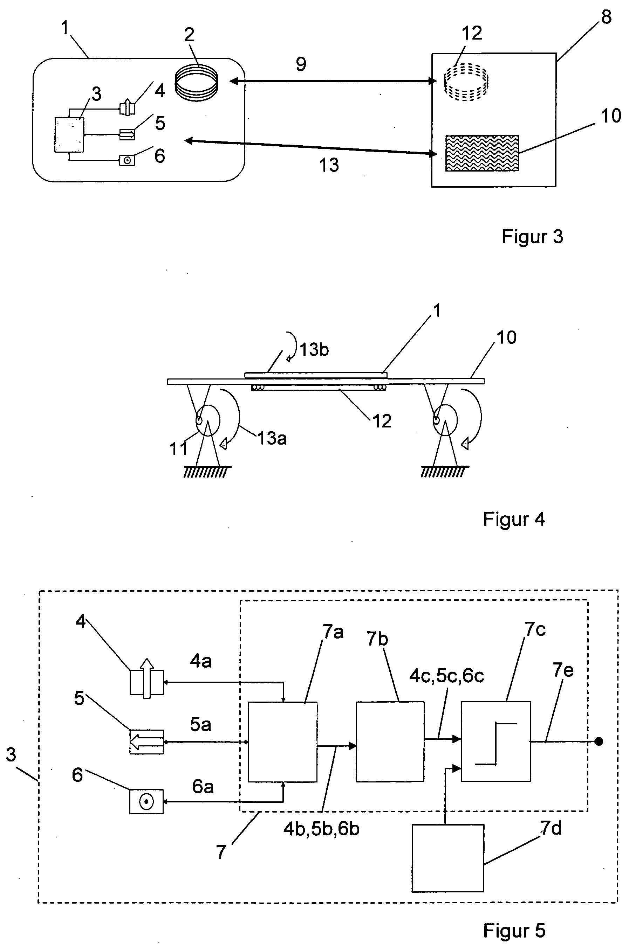

In der Figur 3 ist ein erfindungsgemäßes System zum Freigeben einer Transaktion zwischen einem tragbaren Datenträger 1 und einem Endgerät 8 dargestellt. Der Datenträger 1 entspricht hierbei dem in Figur 1 und 2 beschriebenen Datenträger 1. Das Endgerät 8, englisch terminal, ist in seiner Funktion nicht beschränkt und ist beispielsweise ein Lesegerät. Das Endgerät 8 weist eine Antenne 12 auf. Somit findet eine Nahfeldkommunikation 9 mittels der Antennen 2 und 12 kontaktlos statt. Zusätzlich weist das Endgerät 8 eine schwingfähige Teiloberfläche 10 auf. Mit dieser Teilfläche 10 werden mechanische Schwingungen 13 ausgeführt. Die mechanische Schwingung 13a wird dabei vom Endgerät 8 selbst angeregt. Die Antenne 12 des Lesegeräts ist bevorzugt in oder unter der schwingungsfähigen Teilfläche untergebracht, z. B. in einer koaxialen Anordnung.

Die mechanische Schwingung, die den tragbaren Datenträger 1 anregen, werden in der Figur 3 durch das Endgerät 8 erzeugt und kann beispielsweise linear oder zirkular sein.

Figur 4 zeigt ein Beispiel zur Erzeugung einer zirkularen Schwingung der Teilfläche 10. Hierzu ist die Teilfläche 10 an einem Schwungrad 11 konzentrisch aufgehängt. Eine Drehbewegung 13a des Schwungrads 11 führt zu einer zirkularen Bewegung der Teilfläche 10. In der Praxis haben die Schwingungen eine Amplitude im Millimeter oder Submillimeter-Bereich. Schwingfrequenzen können im Bereich weniger Hertz bis hin zu einigen Zehn Hertz liegen. Derartige mechanische Schwingungen werden vom Menschen als Vibration, ähnlich dem Vibrationsalarm eines Mobilfunkgerätes wahrgenommen.

Zur Durchführung einer Transaktion, beispielsweise einer Bezahltransaktion oder Auslesen sicherheitskritischer Informationen ist es vorgesehen, dass der erfindungsgemäße Datenträger 1 auf die Oberfläche 10 eines erfindungsgemäßen Endgeräts 8 abgelegt wird. Zur Freigabe des Datenaustauschs bzw. der Kommunikation mit dem Datenträger 1 ist vorgesehen, dass zunächst zu einem bestimmten Zeitpunkt vor der Transaktion eine Vibration erzeugt wird. Diese Vibration wird auf den Datenträger 1 übertragen und durch die Bewegungssensoren 4, 5, 5 erfasst. Hierbei kann die Art der Vibration, die Amplitude und die Frequenz der Vibration leicht über die Sensorausgangssignale 4a, 5a, 6a erfasst werden.

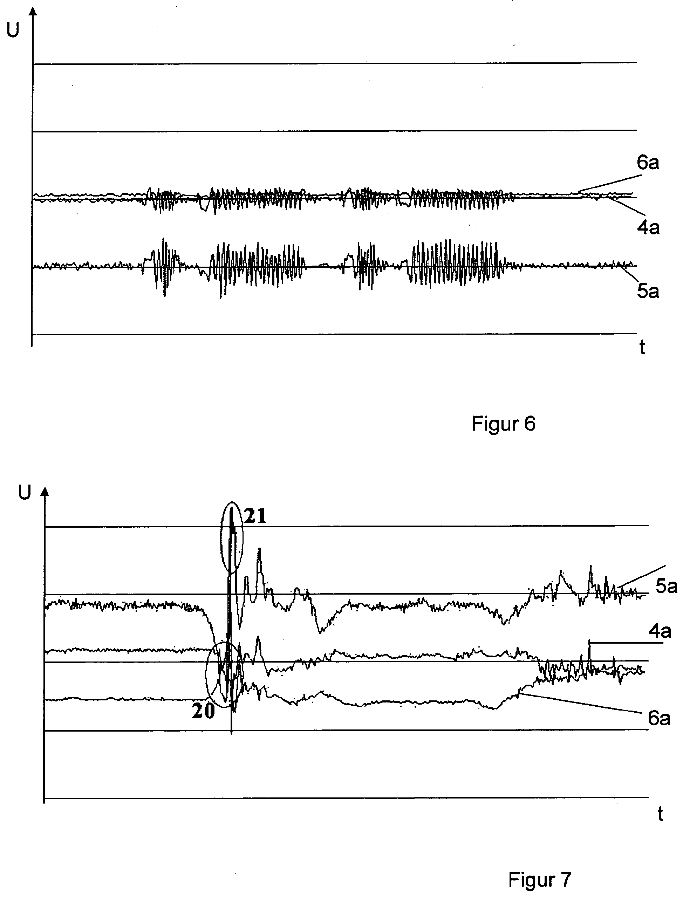

Ein Beispiel für die Sensormesswerte einer gepulsten zirkularen Vibration ist in Figur 6 dargestellt. Die drei Messkurven repräsentieren dabei die Schwingungsachsen X, Y, Z, entsprechend den Signalen 4a, 5a, 6a der Beschleunigungssensoren 4, 5, 6. Erfindungsgemäß ist vorgesehen, dass der Datenträger 1 die Schwingungsmuster der erfassten Schwingungen hinsichtlich zumindest einer charakteristischen Eigenschaft analysiert und auswertet. Befinden sich die Messwerte innerhalb eines Toleranzbereiches eines erwarteten Bereiches, so ist vorgesehen dass die vorgesehenen Transaktion mit dem Datenträger 1 freigegeben wird. Alternativ kann auch der Zugriff auf einen ausgewählten Speicherbereich des Datenträgers 1 und / oder die weitere Kommunikation zwischen dem Endgerät 8 und dem Datenträger 1 freigegeben werden. Der Toleranzbereich kann auch eine Sollwertschwelle eines der charakteristischen Eigenschaften der Schwingung sein, die zur Freigabe überschritten werden muss.

Eine mögliche Option besteht darin, dass das Vibrationssignal auch zur Signalisierung von Betriebszuständen an den Nutzer des Datenträgers 1 ausgegeben wird. Wird der Datenträger 1 mit der Hand auf ein entsprechendes Endgerät 8 gehalten, so sind die Vibrationen leicht zu erfühlen. Dies ist insofern von Vorteil, da ein "Piepsignal" in einer lauten Umgebung leicht überhört wird bzw. ein "Blinksignal" wiederum von blinden Mitmenschen nicht erkannt werden kann. So kann der ersten Vibration, die zur Freigabe einer Transaktion etc. führt, eine zweite Vibration zur Signalisierung einer erfolgreichen Transaktion an den Benutzer folgen. Es kann auch eine art Codierung der Vibration dem Benutzer signalisieren, dass eine Transaktion erfolgreich war, beispielsweise eine Intensitätsschwankung der Vibration (rrr---rrr) bei erfolgreicher Transaktion und länger intensitätsgleiche Vibration (rrrrrrrrrrrrrr) bei Auftreten eines Fehlers. Das Auswerten, Berechnen und Bewerten der mechanischen Schwingungen wird beispielsweise durch eine Software auf dem integrierten Schaltkreis 3 durchgeführt.

Eine weitere Option besteht darin, dass der Datenträger 1 vom Endgerät 8 bestimmte Parameter der Schwingung, insbesondere die Frequenz, analysiert. Eine weitere Möglichkeit besteht auch darin, mehrere Schwingfrequenzen zu überlagern. Eine solche überlagerte Schwingung kann sehr einfach zum Beispiel mit einem elektromagnetischen Schwingsystem erzeugt werden.

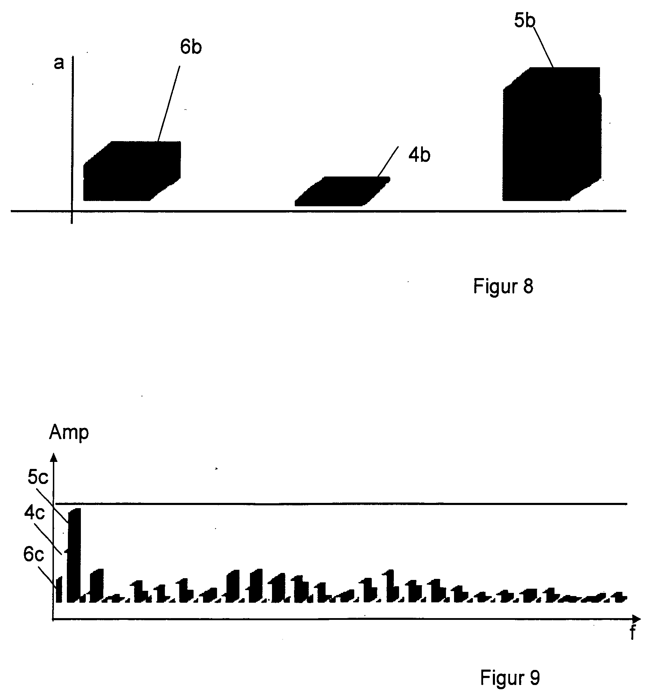

Mit Hilfe einer FFT kann das Auftreten der unterschiedlichen Schwingfrequenzen leicht überprüft werden. In Figur 9 ist dies beispielhaft durch die berechneten FFT-Signale 4c, 5c, 6c dargestellt. Durch die durchgeführte FFT zeigt das Spektrum der ausgewerteten Sensorausgangssignale 4b, 5b, 6b nach einer FFT- Analyse die einzelnen Frequenzanteile in den Signalen.

Ein detailliertes Blockschaltbild eines im tragbaren Datenträger 1 eingebrachten Schaltkreises 3 der vorigen Figuren ist in der Figur 5 dargestellt. Hierbei sind die Sensoren 4, 5, 6 ebenfalls innerhalb des integrierten Schaltkreises 3 angeordnet. Die Ausgangssignale 4a, 5a, 6a der Sensoren 4, 5, 6 werden der Auswerteeinheit 7a zugeführt. Eine Auswertung der Signale kann beispielsweise die Amplitudenhöhe, die Zeitdauer etc. sein. Prinzipiell können diese ausgewerteten Signale direkt der Vergleichseinheit 7c zugeführt werden, um dort ggf. mit aus einem Sollwertspeicher 7d im Datenträger 1 abgelegten Sollwert verglichen werden. Bei Überschreitung des Sollwertes erfolgt die Freigabe der Transaktion durch ein Freigabesignal 7e. Alternativ, so wie in Figur 6 dargestellt werden die ausgewerteten Signale zunächst einer Berechnungseinheit 7b zugeführt. Diese Berechnungseinheit 7c berechnet die Signale 4c, 5c, 6c. Als Berechnung ist beispielsweise eine FFT-Analyse oder die Berechnung des statischen Winkels des Datenträgers aus den ausgewerteten Signalen 4b, 5b, 6b vorgesehen.

In einer zweiten Ausführungsform der Erfindung ist vorgesehen, dass der Datenträger 1 nicht durch vom Endgerät erzeugten mechanischen Schwingungen angeregt wird. Zum Beispiel kann der Datenträger 1 angeregt werden, indem der Datenträger 1 auf eine Oberfläche, beispielsweise eine Oberfläche in Nähe der Antenne 12 des Endgeräts 8 abrupt aufgelegt wird und dort während der Transaktion verbleibt. Das abrupte Auflegen, Aufsetzen oder Aufschlagen des Datenträgers 1 führt zu hohen Beschleunigungswerten 21, wie in Figur 8 dargestellt ist. Auch die Eigenbeschleunigung 20 des Datenträgers 1 vor dem abrupten Auflegen ist in der Figur 8 gut zu erkennen. Mittels der Berechnungseinheit 7b ist es beispielsweise möglich, auszuwerten, welchen statischen Winkel der Datenträger 1 momentan aufweist. Figur 8 zeigt die Messwerte eines Datenträgers 1 in Ruhelage auf einer mit 30° geneigten Oberfläche.

Erfindungsgemäß ist demnach vorgesehen, dass der Datenträger 1 beim Eintritt in den Kommunikationsbereich eines Endgeräts 8 die Beschleunigung misst und die Messwerte analysiert und auswertet. Nach dem abrupten Aufsetzen des Datenträgers 1 auf die Oberfläche des Lesegeräts wird die statische Lage, beispielsweise der Winkel, des Datenträgers 1 ermittelt, der in der Regel plan auf der Oberfläche des Endgeräts 8 aufliegt. Befinden sich die Messwerte innerhalb eines Toleranzbereiches eines erwarteten Bereiches, so ist vorgesehen dass die vorgesehenen Transaktion mit dem Datenträger 1, der Zugriff auf einen ausgewählten Speicherbereich des Datenträgers und / oder die weitere Kommunikation zwischen dem Endgerät 8 und dem Datenträger 1 freigegeben wird.

Eine Option besteht darin, die Auflagefläche (Antennenfläche) des Lesegeräts in einem definierten Winkel anzuordnen, z. B. 30° siehe Figur 8. Der Datenträger 1 kann nach dem Aufsetzen auf die Oberfläche des Endgeräts 8 überprüfen, ob dieser Winkel innerhalb definierter Toleranzbereiche, eingehalten wird.

Eine alternative Anregung des Datenträgers 1 erfolgt, indem ein Benutzer den Datenträgers 1 an einer Oberfläche des Endgeräts 8 hin und her reibt. Dadurch entstehende mechanische Schwingungen bzw. die Eigenbeschleunigung des Datenträgers 1 werden von den Beschleunigungssensoren 4, 5, 6 erfasst und ausgewertet.

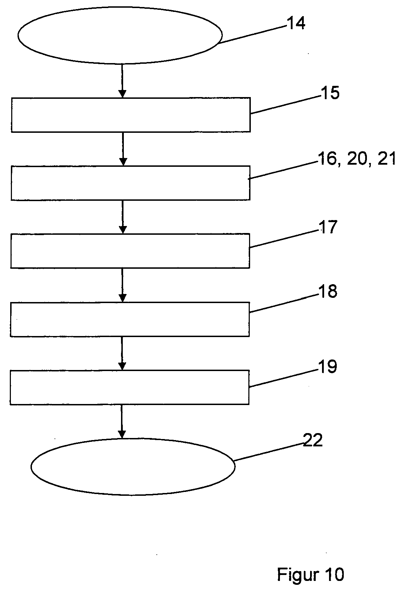

In Figur 10 ist ein beispielhaftes Ablauf diagramm für ein erfindungsgemäßes Verfahren zum Freigeben einer Transaktion zwischen Endgerät 8 und einem tragbaren Datenträger 1 dargestellt. Durch Bereitstellen 14 eines EM-Feld vom Endgerät 8 wird der tragbare Datenträger 1 elektrisch aktiviert 15. Durch Mechanisches Anregen 16 mittels mechanischer Schwingung, beispielsweise Vibration, abrupten Auflegen mit resultierenden hohen Beschleunigungswerten 20, 21 oder Aneinanderreiben der Oberflächen von Datenträger 1 und Endgerät 8 und anschließendem Erfassen 17 der Beschleunigung in X,Y, Z - Richtung mittels der Sensoren 4,5,6 können die Beschleunigungen durch Auswerten und/ oder Berechnen 18 der Beschleunigungssensorausgangssignale 4a, 5a, 6a ermittelt werden. Im Schritt 19 erfolgt das Vergleichen der Signalwerte hinsichtlich charakteristischer Eigenschaften, wie beispielsweise Frequenz, Amplitude, Zeitdauer, statischer Winkel, Frequenzschwankung, Frequenzüberlagerung, Frequenzanteile oder der gleichen mehr. Im Verfahrensschritt 22 erfolgt abschließend das Freigeben der Transaktion bei Überschreiten eines Sollwertes bzw. bei Einhalten eines definierten Toleranzbereichs. Sollwerte und Toleranzbereich sind bevorzugt in einem Speicherbereich des Datenträgers 1 abgelegt.

Das erfindungsgemäße Verfahren ist bevorzugt zumindest teilweise in Form einer Computersoftware im integrierten Schaltkreis 3 implementiert. Der integrierte Schaltkreis 3 führt dann die entsprechenden Verfahrensschritte als implementierte Programmschritte aus.

Als ein weiterer Anwendungsfall der Erfindung ist das Durchführen einer Transaktion mit einem NFC-fähigen Mobiltelefon als tragbarer Datenträger vorgesehen. Ein Benutzer, der beispielsweise eine Bezahltransaktion durchführen möchte, muss diese nun nicht mit der Tastatur seines Mobiltelefons bestätigen, sondern die Freigabe der Transaktion erfolgt gemäß den beschriebenen Erfindungsgegenständen. Durch Anregen des Mobiltelefons als tragbarer Datenträger mittels mechanischer Schwingung erfolgt die Freigabe der Transaktion, sobald charakteristische Eigenschaften der Schwingungen im Mobiltelefon erfasst und ausgewertet worden sind. In dieser Anmeldung synonym verwendet werden die Begriffe Mobiltelefon, PDA, Kommunikationsgerät, Organizer, elektronischer Kalender und der gleichen.

Der entscheidende Vorteil beider Ausführungsformen besteht darin, dass die erwarteten Bewegungsmuster des Datenträgers 1 von einem Angreifer, welcher keinen mechanischen Zugriff auf die Karte besitzt, wie beispielsweise bei einer typischen Relay-Attacke, nicht unbemerkt eingebracht werden können. Auch die absolute Lage der Karte kann durch einen Angreifer nicht unbemerkt verändert werden.

### Bezugszeichenliste

- 1: Tragbarer Datenträger
- 2: Nahfeldantenne tragbarer Datenträger
- 3: Integrierter Schaltkreis
- 4: Beschleunigungssensor X- Richtung
- 4a: Beschleunigungssensor Ausgangssignal
- 4b: ausgewertetes Beschleunigungssignal X-Richtung
- 4c: berechnetes Beschleunigungssignal X-Richtung
- 5: Beschleunigungssensor Y- Richtung
- 5a: Beschleunigungssensor Ausgangssignal
- 5b: ausgewertetes Beschleunigungssignal Y-Richtung
- 5c: berechnetes Beschleunigungssignal Y-Richtung
- 6: Beschleunigungssensor Z- Richtung
- 6a: Beschleunigungssensor Ausgangssignal
- 6b: ausgewertetes Beschleunigungssignal Z-Richtung
- 6c: berechnetes Beschleunigungssignal Z-Richtung
- 7: Freigabevorrichtung
- 7a: Auswerteeinheit
- 7b: Berechnungseinheit
- 7c: Vergleichseinheit
- 7d: Sollwertspeicher
- 7e: Freigabesignal
- 8: Endgerät, Terminal
- 9: Nahfeldkommunikation
- 10: Schwingfähige Teilfläche
- 11: Schwungrad, zirkulare mechanische Schwingung
- 12: Nahfeldantenne Endgerät
- 13a: Mechanische Schwingung Endgerät
- 13b: Mechanische Schwingung tragbarer Datenträger
- 14: Bereitstellen EM-Feld vom Endgerät
- 15: Elektrisches Aktivieren des tragbaren Datenträgers
- 16: Mechanisches Anregen mittels mechanischer Schwingung
- 17: Erfassen der Beschleunigung in X,Y, Z - Richtung
- 18: Auswerten der Beschleunigungssensorausgangssignale
- 19: Vergleichen hinsichtlich charakteristischer Eigenschaften
- 20: Eigenbeschleunigung des Datenträgers
- 21: Hohe Beschleunigung des Datenträgers durch abruptes Auflegen
- 22: Freigeben der Transaktion bei Überschreiten eines Sollwertes

## Patentansprüche

1. Verfahren zum Freigeben einer Transaktion zwischen einem tragbaren Datenträger (1) und einem Endgerät (8) mit den Verfahrensschritten:
a) Einbringen des tragbaren Datenträgers (1) in ein elektromagnetisches Feld, wobei das Endgerät (8) das elektromagnetische Feld erzeugt und der Datenträger (1) Energie aus dem elektromagnetischen Feld zur Energieversorgung des Datenträgers (1) entnimmt,
b) Anregen des tragbaren Datenträgers (1) durch mechanische Schwingung (13),
c) Erfassen der mechanischen Schwingung (13) im tragbaren Datenträger (1) mittels Beschleunigungssensor (4, 5, 6),
d) Auswerten eines Ausgangssignals (4a, 5a, 6a) des Beschleunigungssensors (4, 5, 6) hinsichtlich charakteristischer Eigenschaften der mechanischen Schwingung (13),
e) Freigeben der Transaktion (7e) durch den tragbaren Datenträger (1) sobald durch das Auswerten des Ausgangssignals (4a, 5a, 6a) eine charakteristische Eigenschaft der Schwingung (13) erkannt wurde,
**dadurch gekennzeichnet, dass**:
- das Anregen des tragbaren Datenträgers (1) mit mechanischer Schwingung durch das Endgerät (8) erfolgt.

2. Verfahren nach Anspruch 1, wobei der tragbare Datenträger (1) durch das mechanische Anregen in Eigenschwingung gebracht wird und diese Eigenschwingung erfasst und ausgewertet wird.

3. Verfahren nach Anspruch 1 oder 2, wobei als charakteristische Eigenschaft die Zeitdauer, die Frequenz oder die Amplitude der mechanischen Schwingung ausgewertet wird.

4. Verfahren nach einem der vorhergehenden Ansprüche, wobei das Endgerät (8) lineare oder zirkulare mechanischen Schwingungen (13a) erzeugt und den tragbaren Datenträger (13) mittels dieser linearen oder zirkularen mechanischen Schwingungen (13a) über eine schwingfähige Teiloberfläche (10) des Endgeräts (8) mechanisch anregt.

5. Verfahren nach Anspruch 4, wobei die linearen oder zirkularen mechanischen Schwingungen (13a) des Endgeräts (8) in der Frequenz schwanken und das Frequenzschwanken als charakteristische Eigenschaft im tragbaren Datenträger (1) ausgewertet wird.

6. Verfahren nach Anspruch 4 oder 5, wobei mehrere lineare oder zirkulare mechanischen Schwingungen (13a) des Endgeräts (8) überlagert sind und diese Schwingungsüberlagerung als charakteristische Eigenschaft im tragbaren Datenträger (1) ausgewertet wird.

7. Verfahren nach einem der Ansprüche 4 bis 6, wobei während der Transaktion weitere lineare oder zirkulare Schwingungen (13a) ausgesendet werden.

8. Verfahren nach einem der Ansprüche 4 bis 7, wobei die Antenne (12) des Endgeräts(8) zum Aussenden des elektromagnetischen Feldes in oder unter der schwingfähigen Teilfläche (10) des Endgeräts (8) eingebracht wird.

9. Verfahren nach einem der Ansprüche 4 bis 8, wobei das Endgerät (8) vibriert.

10. Verfahren zum Freigeben einer Transaktion zwischen einem tragbaren Datenträger (1) und einem Endgerät (8) mit den Verfahrensschritten: a) Einbringen des tragbaren Datenträgers (1) in ein elektromagnetisches Feld, wobei das Endgerät (8) das elektromagnetische Feld erzeugt und der Datenträger (1) Energie aus dem elektromagnetischen Feld zur Energieversorgung des Datenträgers (1) entnimmt, b) Anregen des tragbaren Datenträgers (1) durch mechanische Schwingung (13), c) Erfassen der mechanischen Schwingung (13) im tragbaren Datenträger (1) mittels Beschleunigungssensor (4,5,6), d) Auswerten eines Ausgangssignals (4a, 5a, 6a) des Beschleunigungssensors (4, 5, 6) hinsichtlich charakteristischer Eigenschaften der mechanischen Schwingung (13), e) Freigeben der Transaktion (7e) durch den tragbaren Datenträger (1) sobald durch das auswerten des Ausgangssignals (4a, 5a, 5b) eine charakteristische Eigenschaft der Schwingung (13) erkannt wurde, **dadurch gekennzeichnet, dass**: das Anregen des tragbaren Datenträgers mit mechanischer Schwingung erfolgt wobei der tragbare Datenträger (1) mechanisch angeregt wird, indem der tragbare Datenträger (1) abrupt auf das Endgerät (8) aufgelegt wird und das abrupte Auflegen als charakteristische Eigenschaft der mechanischen Schwingungen ausgewertet wird.

11. Verfahren nach Anspruch 10, wobei:
- die Eigenbeschleunigung (20) und/oder hohe Beschleunigungswerte (21) vor dem abrupten Auflegen und/ oder
- eine Winkelerfassung nach dem abrupten Auflegen als charakteristische Eigenschaft der mechanischen Schwingungen ausgewertet wird.

12. Verfahren zum Freigeben einer Transaktion zwischen einem tragbaren Datenträger (1) und einem Endgerät (8) mit den Verfahrensschritten: a) Einbringen des tragbaren Datenträgers (1) in ein elektromagnetisches Feld, wobei das Endgerät (8) das elektromagnetische Feld erzeugt und der Datenträger (1) Energie aus dem elektromagnetischen Feld zur Energieversorgung des Datenträgers (1) entnimmt, b) Anregen des tragbaren Datenträgers (1) durch mechanische Schwingung (13), c) Erfassen der mechanischen Schwingung (13) im tragbaren Datenträger (1) mittels Beschleunigungssensor (4, 5, 6), d) Auswerten eines Ausgangssignals ( 4a, 5a, 6a) des Beschleunigungssensors (4, 5, 6) hinsichtlich charakteristischer Eigenschaften der mechanischen Schwingung (13), e) Freigeben der Transaktion (7e) durch den tragbaren Datenträger (1) sobald durch das Auswerten des Ausgangssignals (4a, 5a, 5b) eine charakteristische Eigenschaft der Schwingung ( 13) erkannt wurde, **dadurch gekennzeichnet, dass**: das Anregen des tragbaren Datenträgers mit mechanischer Schwingung (8) erfolgt wobei der tragbare Datenträger (1) mechanisch angeregt wird, indem der tragbare Datenträger (1) an einer Außenfläche des Endgeräts (8) gerieben wird.

13. Tragbarer Datenträger vorgesehen zur Datenübertragung mit einem Endgerät, wobei der Datenträger eine Freigabevorrichtung aufweist und die Freigabevorrichtung umfasst:
- einen Beschleunigungssensor, wobei mechanische Schwingungen des Endgeräts dazu ausgebildet sind den Datenträger anzuregen und die mechanischen Schwingungen durch den Beschleunigungssensor feststellbar sind und
- eine Auswerteinheit, wobei die Auswerteinheit zum Auswerten der Beschleunigungssensorausgangssignale vorgesehen ist und die mechanischen Schwingungen feststellen kann,
wobei eine Datenübertragung zwischen tragbarem Datenträger und dem Endgerät freigebbar ist, sobald die Auswerteeinheit aufgrund einer, für die Freigabe erforderlichen Charakteristik der mechanischen Schwingung, ein Freigabesignal erzeugt.

14. Modul zum Freigeben einer Transaktion mit einem Endgerät, umfassend:
- ein Beschleunigungssensor zum Erfassen einer mechanischen Schwingung, wobei das Anregen des Moduls mit der mechanischen Schwingung durch das Endgerät erfolgt,
- eine Auswerteinheit zum Auswerten der erfassten mechanischen Schwingung, wobei die mechanische Schwingung hinsichtlich charakteristischer Eigenschaften ausgewertet wird,
- eine Vergleichseinheit zum Vergleich des charakteristischen Eigenschaften der mechanischen Schwingung der Auswerteeinheit mit einem Sollwert der charakteristischen Eigenschaften,
wobei die Vergleichseinheit die Transaktion freigibt, wenn der Sollwert der charakteristischen Eigenschaft überschritten ist und
die Vergleichseinheit die Transaktion nicht freigibt, wenn der Sollwert der charakteristischen Eigenschaft unterschritten ist.

15. System zum Freigeben einer Transaktion umfassend:
- einen tragbaren Datenträger, beinhaltend ein Modul gemäß Anspruch 14 und
- ein Endgerät,
wobei der tragbare Datenträger mit einer mechanischen Schwingung anregbar ist und die Vergleichseinheit des Moduls zum Freigeben bei Überschreitung eines Sollwerts einer charakteristischen Eigenschaft der mechanischen Schwingung die Transaktion freigibt.

## Claims

1. A method for releasing a transaction between a portable data carrier (1) and an end device (8) having the method steps of:
a) bringing the portable data carrier (1) into an electromagnetic field, wherein the end device (8) generates the electromagnetic field, and the data carrier (1) draws power from the electromagnetic field for the power supply of the data carrier (1),
b) exciting the portable data carrier (1) by mechanical oscillation (13),
c) capturing the mechanical oscillation (13) in the portable data carrier (1) by means of acceleration sensor (4, 5, 6),
d) evaluating an output signal (4a, 5a, 6a) of the acceleration sensor (4, 5, 6) with regard to characteristic properties of the mechanical oscillation (13),
e) releasing the transaction (7e) by the portable data carrier (1) as soon as a characteristic property of the oscillation (13) has been recognized through the evaluation of the output signal (4a, 5a, 5b),
**characterized in that:**
- the excitation of the portable data carrier (1) with mechanical oscillation is effected by the end device (8).

2. The method according to claim 1, wherein the portable data carrier (1) is set into self-oscillation by the mechanical excitation and said self-oscillation is captured and evaluated.

3. The method according to claim 1 or 2, wherein as characteristic property the time duration, the frequency or the amplitude of the mechanical oscillation is evaluated.

4. The method according to any of the preceding claims, wherein the end device (8) generates linear or circular mechanical oscillations (13a) and mechanically excites the portable data carrier (13) by means of these linear or circular mechanical oscillations (13a) via an oscillatable partial surface (10) of the end device (8).

5. The method according to claim 4, wherein the linear or circular mechanical oscillations (13a) of the end device (8) vary in frequency and the frequency variation is evaluated as the characteristic property in the portable data carrier (1).

6. The method according to claim 4 or 5, wherein several linear or circular oscillations (13a) of the end device (8) are superimposed and this oscillation superimposition is evaluated as the characteristic property in the portable data carrier (1).

7. The method according to any of the claims 4 to 6, wherein during the transaction further linear or circular oscillations (13a) are emitted.

8. The method according to any of the claims 4 to 7, wherein the antenna (12) of the end device (8) is inserted in or under the oscillatable partial surface (10) of the end device (8) for emitting the electromagnetic field.

9. The method according to any of the claims 4 to 8, wherein the end device (8) vibrates.

10. A method for releasing a transaction between a portable data carrier (1) and an end device (8) having the method steps of:
a) bringing the portable data carrier (1) into an electromagnetic field, wherein the end device (8) generates the electromagnetic field, and the data carrier (1) draws power from the electromagnetic field for the power supply of the data carrier (1),
b) exciting the portable data carrier (1) by mechanical oscillation (13),
c) capturing the mechanical oscillation (13) in the portable data carrier (1) by means of acceleration sensor (4, 5, 6),
d) evaluating an output signal (4a, 5a, 6a) of the acceleration sensor (4, 5, 6) with regard to characteristic properties of the mechanical oscillation (13),
e) releasing the transaction (7e) by the portable data carrier (1) as soon as a characteristic property of the oscillation (13) has been recognized through the evaluation of the output signal (4a, 5a, 5b),
**characterized in that:**
the excitation of the portable data carrier is effected by mechanical oscillation, wherein the portable data carrier (1) is mechanically excited by the portable data carrier (1) being placed abruptly onto the end device (8) and the abrupt placement is evaluated as the characteristic property of the mechanical oscillations.

11. The method according to claim 10, wherein:
- the self-acceleration (20) and/or high acceleration values (21) before the abrupt placement and/or
- an angle capture after the abrupt placement is evaluated as the characteristic property of the mechanical oscillations.

12. A method for releasing a transaction between a portable data carrier (1) and an end device (8) having the method steps of:
a) bringing the portable data carrier (1) into an electromagnetic field, wherein the end device (8) generates the electromagnetic field, and the data carrier (1) draws power from the electromagnetic field for the power supply of the data carrier (1),
b) exciting the portable data carrier (1) by mechanical oscillation (13),
c) capturing the mechanical oscillation (13) in the portable data carrier (1) by means of acceleration sensor (4, 5, 6),
d) evaluating an output signal (4a, 5a, 6a) of the acceleration sensor (4, 5, 6) with regard to characteristic properties of the mechanical oscillation (13),
e) releasing the transaction (7e) by the portable data carrier (1) as soon as a characteristic property of the oscillation (13) has been recognized through the evaluation of the output signal (4a, 5a, 5b),
**characterized in that:**
the excitation of the portable data carrier is effected by mechanical oscillation (8), wherein
the portable data carrier (1) is excited mechanically by rubbing the portable data carrier (1) on an outer surface of the end device (8).

13. A portable data carrier provided for data transfer with an end device, wherein the data carrier has a release apparatus and the release apparatus comprises:
- an acceleration sensor, wherein mechanical oscillations of the end device are configured to excite the data carrier and the mechanical oscillations are ascertainable by the acceleration sensor and
- an evaluation unit, wherein the evaluation unit is provided for evaluating the acceleration sensor output signals and can ascertain the mechanical oscillations,
wherein a data transfer between portable data carrier and end device is releasable as soon as the evaluation unit generates a release signal on the basis of a characteristic of the mechanical oscillation required for the release.

14. A module for releasing a transaction with an end device, comprising:
- an acceleration sensor for capturing a mechanical oscillation, wherein the excitation of the module with the mechanical oscillation is effected by the end device,
- an evaluation unit for evaluating the captured mechanical oscillation, wherein the mechanical oscillation is evaluated with regard to characteristic properties,
- a comparing unit for comparing the characteristic properties of the mechanical oscillation of the evaluation unit with a target value of the characteristic properties,
wherein the comparing unit releases the transaction when the target value of the characteristic property is exceeded, and
the comparing unit does not release the transaction when the target value of the characteristic property is undershot.

15. A system for releasing a transaction comprising:
- a portable data carrier, including a module according to claim 14 and
- an end device,
wherein the portable data carrier is excitable with a mechanical oscillation, and the comparing unit of the module for releasing releases the transaction upon exceeding of a target value of a characteristic property of the mechanical oscillation.

## Revendications

1. Procédé de validation d'une transaction entre un support de données portable (1) et un terminal (8), comprenant les étapes de procédé suivantes:
a) introduction du support de données portable (1) dans un champ électromagnétique, le terminal (8) générant le champ électromagnétique et le support de données portable (1) puisant de l'énergie dans le champ électromagnétique pour l'approvisionnement énergétique du support de données portable (1),
b) excitation du support de données portable (1) par vibration mécanique (13),
c) saisie de la vibration mécanique (13) dans le support de données portable (1) au moyen d'un capteur d'accélération (4, 5, 6),
d) évaluation d'un signal de sortie (4a, 5a, 6a) du capteur d'accélération (4, 5, 6) quant à des propriétés caractéristiques de la vibration mécanique (13),
e) validation de la transaction (7e) par le support de données portable (1) dès que, par l'évaluation du signal de sortie (4a, 5a, 6a), une propriété caractéristique de la vibration (13) a été reconnue,
**caractérisé en ce que**
- l'excitation du support de données portable (1) a lieu avec vibration mécanique par le terminal (8).

2. Procédé selon la revendication 1, le support de données portable (1) étant, par l'excitation mécanique, mis en propre vibration et saisissant et évaluant cette propre vibration.

3. Procédé selon la revendication 1 ou 2, la propriété caractéristique évaluée étant la durée, la fréquence ou l'amplitude de la vibration mécanique.

4. Procédé selon une des revendications précédentes, le terminal (8) générant des vibrations mécaniques (13a) linéaires ou circulaires et excitant mécaniquement le support de données portable (13) au moyen de ces vibrations mécaniques (13a) linéaires ou circulaires par l'intermédiaire d'une surface partielle (10) susceptible de vibrer du terminal (8).

5. Procédé selon la revendication 4, les vibrations mécaniques (13a) linéaires ou circulaires du terminal (8) variant en fréquence, et la variation de fréquence étant évaluée en tant que propriété caractéristique dans le support de données portable (1).

6. Procédé selon la revendication 4 ou 5, plusieurs vibrations mécaniques (13a) linéaires ou circulaires du terminal (8) étant superposées et cette superposition de vibrations étant évaluée en tant que propriété caractéristique dans le support de données portable (1).

7. Procédé selon une des revendications de 4 à 6, cependant que, durant la transaction, des vibrations (13a) linéaires ou circulaires supplémentaires sont émises.

8. Procédé selon une des revendications de 4 à 7, l'antenne (12) du terminal (8) étant, pour l'émission du champ électromagnétique, insérée dans ou sous la surface partielle (10) susceptible de vibrer du terminal (8).

9. Procédé selon une des revendications de 4 à 8, le terminal (8) vibrant.

10. Procédé de validation d'une transaction entre un support de données portable (1) et un terminal (8), comprenant les étapes de procédé suivantes: a) introduction du support de données portable (1) dans un champ électromagnétique, le terminal (8) générant le champ électromagnétique et le support de données portable (1) puisant de l'énergie dans le champ électromagnétique pour l'approvisionnement énergétique du support de données portable (1), b) excitation du support de données portable (1) par vibration mécanique (13), c) saisie de la vibration mécanique (13) dans le support de données portable (1) au moyen d'un capteur d'accélération (4, 5, 6), d) évaluation d'un signal de sortie (4a, 5a, 6a) du capteur d'accélération (4, 5, 6) quant à des propriétés caractéristiques de la vibration mécanique (13), e) validation de la transaction (7e) par le support de données portable (1) dès que, par l'évaluation du signal de sortie (4a, 5a, 5b), une propriété caractéristique de la vibration (13) a été reconnue, **caractérisé en ce que**:
l'excitation du support de données portable a lieu avec vibration mécanique, le support de données portable (1) étant excité mécaniquement, ce qui a lieu **en ce que** le le support de données portable (1) est placé abruptement sur le terminal (8) et le placement abrupt est évalué en tant que propriété caractéristique des vibrations mécaniques.

11. Procédé selon la revendication 10, cependant que:
la propre accélération (20) et/ou de hautes valeurs d'accélération (21) avant le placement abrupt et/ou
- une saisie de l'angle après le placement abrupt est évaluée en tant que propriété caractéristique des vibrations mécaniques.

12. Procédé de validation d'une transaction entre un support de données portable (1) et un terminal (8), comprenant les étapes de procédé suivantes: a) introduction du support de données portable (1) dans un champ électromagnétique, le terminal (8) générant le champ électromagnétique et le support de données portable (1) puisant de l'énergie dans le champ électromagnétique pour l'approvisionnement énergétique du support de données portable (1), b) excitation du support de données portable (1) par vibration mécanique (13), c) saisie de la vibration mécanique (13) dans le support de données portable (1) au moyen d'un capteur d'accélération (4, 5, 6), d) évaluation d'un signal de sortie (4a, 5a, 6a) du capteur d'accélération (4, 5, 6) quant à des propriétés caractéristiques de la vibration mécanique (13), e) validation de la transaction (7e) par le support de données portable (1) dès que, par l'évaluation du signal de sortie (4a, 5a, 5b), une propriété caractéristique de la vibration (13) a été reconnue, **caractérisé en ce que**: l'excitation du support de données portable a lieu avec vibration mécanique (8), le support de données portable (1) étant excité mécaniquement, ce qui a lieu **en ce que** le le support de données portable (1) est frotté à une surface extérieure du terminal (8).

13. Support de données portable prévu pour transmission de données avec un terminal (8), le support de données comportant un dispositif de validation et le dispositif de validation comprenant:
- un capteur d'accélération, des vibrations mécaniques du terminal étant réalisées pour exciter le support de données et les vibrations mécaniques étant détectables par le capteur d'accélération, et
- une unité d'évaluation, l'unité d'évaluation étant prévue pour l'évaluation des signaux de sortie du capteur d'accélération et pouvant détecter les vibrations mécaniques,
une transmission de données entre le support de données portable et le terminal pouvant être validée dès que l'unité d'évaluation génère, en raison d'une caractéristique de la vibration mécanique nécessaire pour la validation, un signal de validation.

14. Module de validation d'une transaction avec un terminal, comprenant:
- un capteur d'accélération pour la saisie d'une vibration mécanique, l'excitation du module ayant lieu avec la vibration mécanique par le terminal,
- une unité d'évaluation pour l'évaluation de la vibration mécanique saisie, la vibration mécanique étant évaluée quant à des propriétés caractéristiques,
- une unité de comparaison pour la comparaison des propriétés caractéristiques de la vibration mécanique de l'unité d'évaluation avec une valeur de consigne des propriétés caractéristiques, l'unité de comparaison validant la transaction quand la valeur de consigne de la propriété
caractéristique est dépassée et
l'unité de comparaison ne validant pas la transaction quand la valeur de consigne de la propriété caractéristique n'est pas atteinte.

15. Système de validation d'une transaction, comprenant:
- un support de données portable, comportant un module suivant la revendication 14 et
- un terminal,
le support de données portable pouvant être excité avec une vibration mécanique et l'unité de comparaison du module de validation validant la transaction quand il y a dépassement d'une valeur de consigne d'une propriété caractéristique de la vibration mécanique.
